# EUROPEAN PATENT SPECIFICATION

(11) **EP 1 722 515 B1**
(45) Date of publication and mention of the grant of the patent: **24.12.2008**
(21) Application number: 05076118.8
(22) Date of filing: 11.05.2005
(51) Int. Cl.: H04L 12/437, H04L 12/423

(54) **Ring system**
Ringsystem
Système en anneau

(43) Date of publication of application: 15.11.2006
(73) Proprietor: Nokia Siemens Networks GmbH & Co. KG, 81541 München (DE)
(72) Inventor: Ramalho Ribeiro dos Santos, José Miguel, 1170-329 Lisboa (PT)

(56) References cited:
- CA-A1- 2 477 070
- US-A1- 2004 001 449
- US-B1- 6 766 482

## Description

This invention relates to an improved method of operation of telecommunication systems comprising at least one network where data in appropriate form is sent between nodes via links. It has particular but not exclusive application to LAN's, WLAN's such as Ethernet.

US Patent Application US 2004/0001449 discloses an apparatus and method for a system including an active (primary) node and a standby node. In the case of a failure of the active node, the standby node assumes the role of the primary node.

In a ring system, one span needs to be idle. This is controlled by a special node called a redundancy manager (RM) node whose function is to block a link adjacent to it. It does not send data along that link and ignores traffic to one of the spans. The role of the RM is governed by the configuration.

Every node belonging to a ring has two ports which make up part of the ring; one is called the primary port the other is called the secondary port. The RM normally blocks its secondary port. If there is an error caused by a failed link in the ring, the RM stops blocking the secondary port and checks if there are any errors in the ring. This is achieved by sending test packets around the ring and verifying if packets are received.

A system or network having such redundancy properties including an RM is, for example, disclosed in the Canadian Patent Application CA 2477070.

A problem with the prior art is that the RM often becomes overloaded and has to perform its role as RM as well as its normal operational duties. The invention overcomes this problem.

The invention comprises a method and a system of managing a communication system designed as a ring system comprising a number of processor nodes having a first and a second port each, the nodes being connected via links, comprising the steps of:
- assigning one node as a redundancy manager,
- blocking a link on said second port of the redundancy manager node,
- determining whether said redundancy manager node has a usage above a threshold, and if so
- the redundancy manager node requesting the node connected directly to its second port to became the new redundancy manager, and if so
- the old redundancy manager node opening its blocked link and the requested node becoming the new redundancy manager.

Thus the redundancy manager has the option to request to exchange the responsibility of keeping the loop open (is this after a block or anytime) by sending a request to the node directly connected to its second port. If the other node does not accept to be the new RM it waits a predetermined time before sending a new request. When the node accepts to become the new RM, it informs the old RM that it has accepted the request and starts protecting the domain, and e.g. sending test packets to ascertain the ring is intact.

In a preferred embodiment, after a certain number of packets received (sent by what received by what, what is the significance of "certain number of packets") the new RM requests to the old RM to stop its protection function and both reconfigure to themselves and inform the exchange to the network management software/control of the reconfiguration.

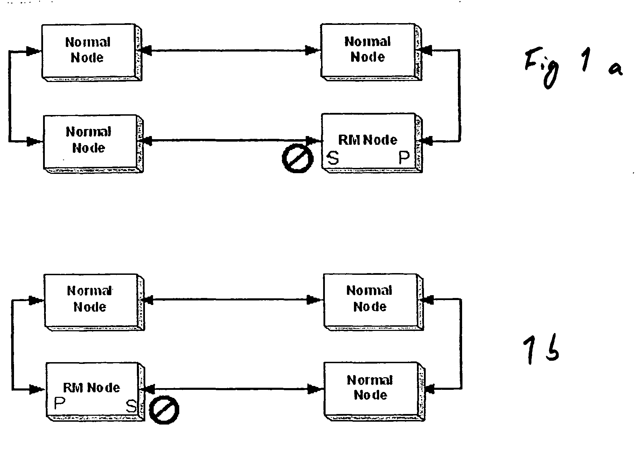

Figure 1 shows an example of the invention. Figure 1 shows a ring system 1 having a number of nodes 2, 3, 4 and 5, each node having responsibility for a number of servers. The redundancy manager 2 is one of the nodes and blocks one of its links to an adjacent node 3 such that in operation no data flows along that link, see figure la.

It is determined whether the RM work-rate is above a certain threshold i.e. if CPU usage is above a certain threshold. If yes, RM will request that adjacent node 3 to become the new RM whose responsibility it is to manage the ring.

If it accepts, it will then become the new RM. See figure 1(b).

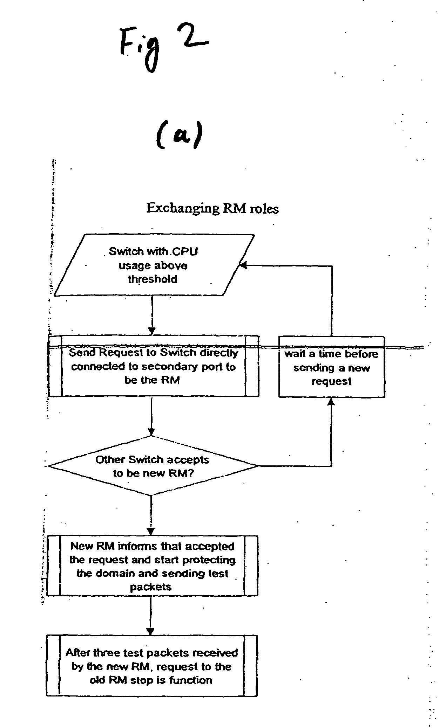

Figure 2 shows a flowchart showing the operation of a general operation of the invention.

## Claims

1. A method of managing a communication system designed as a ring system comprising a number of processor nodes (normal node / RM node) having a first (P) and a second (S) port each, the nodes (normal node / RM node) being connected via links, comprising the steps of:
- assigning one node as a redundancy manager,
- blocking a link on said second port (S) of the redundancy manager node (RM node); and being **characterised by** the following steps:
- determining whether said redundancy manager node (RM node) has a usage above a threshold, and if so
- the redundancy manager node (RM node) requesting the node connected directly to its second port (S) to become the new redundancy manager, and if so
- the old redundancy manager node (RM node) opening its blocked link and the requested node becoming the new redundancy manager.

2. A system incorporating means being adapted to perform each of the steps of the method of claim 1.

## Patentansprüche

1. Verfahren zum Verwalten eines als Ringsystem ausgelegten Kommunikationssystems mit einer Anzahl von Prozessorknoten (Normalknoten/RM-Knoten) mit jeweils einem ersten (P) und einem zweiten (S) Anschluß, wobei die Knoten (Normalknoten/RM-Knoten) über Verbindungsstrecken verbunden sind, umfassend die Schritte des:
- Zuweisens eines Knotens als Redundanzverwalter,
- Blockierens einer Verbindungsstrecke an dem zweiten Anschluß (S) des Redundanzverwalterknotens (RM-Knoten); und **gekennzeichnet durch** folgende Schritte:
- Bestimmen, ob der Redundanzverwalterknoten (RM-Knoten) eine Benutzung oberhalb eines Schwellwerts aufweist, und wenn ja,
- daß der Redundanzverwalterknoten (RM-Knoten) anfordert, daß der direkt mit seinem zweiten Anschluß (S) verbundene Knoten zum neuen Redundanzverwalter wird, und wenn ja,
- daß der alte Redundanzverwalterknoten (RM-Knoten) seine blockierte Verbindungsstrecke öffnet und der angeforderte Knoten zum neuen Redundanzverwalter wird.

2. System umfassend Mittel zum Durchführen jedes der Schritte des Verfahrens nach Anspruch 1.

## Revendications

1. Procédé de gestion d'un système de communication conçu comme un système en anneau comprenant un certain nombre de noeuds processeur (noeud normal / noeud RM) ayant un premier (P) et un deuxième (S) ports chacun, les noeuds (noeud normal / noeud RM) étant connectés par l'intermédiaire de liaisons, comprenant les étapes de :
- attribution d'un noeud en tant que gestionnaire de redondance,
- blocage d'une liaison sur ledit deuxième port (S) du noeud gestionnaire de redondance (noeud RM);
et étant **caractérisé par** les étapes suivantes :
- détermination de savoir si ledit noeud gestionnaire de redondance (noeud RM) a une utilisation au dessus d'un seuil, et si tel est le cas
- le noeud gestionnaire de redondance (noeud RM) demandant au noeud connecté directement à son deuxième port (S) de devenir le nouveau gestionnaire de redondance, et si tel est le cas
- l'ancien noeud gestionnaire de redondance (noeud RM) ouvrant sa liaison bloquée et le noeud interrogé devenant le nouveau gestionnaire de redondance.

2. Système incorporant des moyens adaptés pour exécuter chacune des étapes du procédé selon la revendication 1.
